# EUROPÄISCHE PATENTSCHRIFT

(11) **EP 2 049 419 B1**
(45) Veröffentlichungstag und Bekanntmachung des Hinweises auf die Patenterteilung: **24.11.2010**
(21) Anmeldenummer: 07801539.3
(22) Anmeldetag: 07.08.2007
(51) Int. Cl.: B65G 39/12

(54) **STRECKENFÖRDERER MIT LAGERELEMENT**
DRIFT CONVEYOR HAVING A BEARING ELEMENT
CONVOYEUR DE GALERIE AVEC ÉLÉMENT DE PALIER

(30) Priorität: 09.08.2006 DE 102006037261
(43) Veröffentlichungstag der Anmeldung: 22.04.2009
(73) Patentinhaber: Interroll Holding AG, 6592 Sant 'Antonino (CH)
(72) Erfinder: WEICHBRODT, Reinhold, 42929 Wermelskirchen (DE)
(74) Vertreter: Müller-Boré & Partner Patentanwälte
(86) Internationale Anmeldenummer: PCT/EP2007/006979
(87) Internationale Veröffentlichungsnummer: WO 2008/017460

(56) Entgegenhaltungen:
- WO-A-99/16686
- DE-A1- 3 345 368
- US-A- 5 025 917

## Beschreibung

### Gebiet der Erfindung

Die Erfindung bezieht sich auf ein Lagerelement zum Einsetzen in einen Lagerrahmen mit Dichtfunktion zur Aufnahme einer zu lagernden Rollenachse gemäß dem Oberbegriff des Anspruchs 1, auf ein Rollenschild zur stirnseitigen Abdeckung einer Transportrolle gemäß dem Oberbegriff des Anspruchs 10, auf eine solche Tansportrolle gemäß dem Oberbegriff des Anspruchs 15 sowie auf einen Streckenförderer gemäß dem Oberbegriff des Anspruchs 17, welcher unter anderem einen Lagerrahmen, eine solche Transportrolle, und ein solches Lagerelement aufweist.

### Hintergrund der Erfindung und Stand der Technik

Es existieren im Stand der Technik bereits Streckenförderer, die einen Profilrahmen aufweisen, in den Förderrollen eingesetzt sind. Diese Förderrollen weisen Achsbolzen auf und sind um die Achsbolzen drehbar gelagert. Die Achsbolzen werden in entsprechende Löcher eingesetzt, die in dem Profilrahmen vorgesehen sind. Dabei sind die Löcher in Profilrahmen und der Durchmesser der Achsbolzen mit Spiel bemessen, so daß die Förderrollen zwangsfrei montiert werden können.

Teilweise werden Profilrahmen aus geschlossenen Profilen hergestellt bzw. aus Profilen mit Abdeckungen, so daß in dem Hohlraum im Profil die Steuerelektronik für Antriebe und Sensoren untergebracht werden kann.

In Abhängigkeit davon, welche Güter über die Förderanlagen transportiert werden sollen, müssen die Förderanlagen zum Teil gereinigt werden. Dabei wird angestrebt, daß bei der Reinigung keine Feuchtigkeit in das Profilinnere gelangen und dort die Elektronik beschädigen kann. Zum Teil wird dies dadurch gelöst, daß keine Löcher in das Profil gebohrt werden, sondern daß auf das geschlossene Profil von außen Achshalterungen aufgebracht werden. Diese werden zum Teil angeschweißt oder angeschraubt. Hierdurch wird gewährleistet, daß keine Feuchtigkeit ins Profil eindringen kann. Die Herstellung solcher Profile mit außen angebrachten Achshalterungen ist jedoch aufwendig und teuer. Außerdem entstehen bei den bekannten Konstruktionen von Förderanlagen im Betrieb zum Teil Vibrationen und störende Geräusche, so daß die bekannten Förderanlagen nur mit geringen Fördergeschwindigkeiten betrieben werden können.

Das Dokument US-A-5 025 917 offenbart ein Lagerelement gemäß dem Oberbegriff des Anspruchs 1, ein Rollenschild gemäß dem Oberbegriff des Anspruchs 10, eine Transportrolle gemäß dem Oberbegriff des Anspruchs 15 und ein steckenförderer gemäß dem Oberbegriff des Anspruchs 17.

### Aufgabe

Es ist eine Aufgabe der Erfindung, Mittel bereitzustellen, die es ermöglichen, einen Streckenförderer günstig herzustellen, der mit hohen Fördergeschwindigkeiten betrieben werden kann und im Betrieb zuverlässig und leicht zu reinigen ist.

### Lösung der Aufgabe

Die Aufgabe wird durch die Vorrichtungen gemäß den nebengeordneten Ansprüchen gelöst. Vorteilhafte Ausführungsformen sind in den Unteransprüchen offenbart.

Ein Aspekt der Erfindung betrifft ein Lagerelement mit Dichtfunktion zur Aufnahme einer zu lagernden Rollenachse und zum Einsetzen in einen Lagerrahmen, welches auf einer ersten Seite eine Achsaufnahme, einen ersten Dichtbereich und einen Drehschlußbereich aufweist, der derart gestaltet ist, daß eine Verdrehung des Lagerelements gegenüber einem auf der ersten Seite angrenzenden Bauteil insbesondere gegenüber einem Rollenschild, das ebenfalls Gegenstand dieser Anmeldung ist, verhindert werden kann, und das auf einer im wesentlichen der ersten Seite gegenüberliegenden zweiten Seite des Lagerelements einen zweiten Dichtbereich zur Abdichtung zwischen Lagerelement und Lagerrahmen aufweist. Dabei kann der Drehschlußbereich vorzugsweise als Formschlußbereich oder als Reibschlußbereich ausgebildet sein, wie nachfolgend näher beschrieben wird. Ein solches Lagerelement hat den Vorteil, daß sowohl zwischen dem Lagerelement und dem Lagerrahmen als auch zwischen dem Lagerelement und dem Rollenschild eine Dichtung bewirkt wird, so daß Staub und Flüssigkeit nicht durch die Ausnehmung im Lagerrahmen in das Innere des Lagerrahmens gelangen kann. Durch den Drehschluß zwischen Lagerelement und Rollenschild wird gewährleistet, daß sich die beiden Bauteile nicht relativ gegeneinander verdrehen können, so daß verhindert wird, daß Feuchtigkeit, die bei einer Relativdrehung der Dichtflächen an der Dichtung vorbei ins Innere transportiert werden könnte, in das Profilinnere eindringt. Ferner weist eine Transportrolle mit einem gegen Verdrehung gesicherten Schild eine größere Lebensdauer auf. Weiterhin dient das Lagerelement einem Schutz der Oberfläche des Lagerelements, so daß die Oberflächengüte des Lagerelements bei der Montage nicht so leicht verletzt wird. Die verwendeten Begriffe "erste Seite" und "zweite Seite" sind funktional zu verstehen. Es sollen zwei Dichtflächen auf zwei Seiten des Lagerelements geschaffen werden. Dabei können die Begriffe zwei Seiten in axialer Richtung oder zwei Seiten in radialer Richtung verstanden werden. Wenn die Dichtflächen auf zwei axial gegenüberliegenden Seiten vorgesehen werden, hat dies den Vorteil, daß eine Dichtung über eine Kraft in axialer Richtung erzeugt werden kann, wohingegen ein Formschluß über eine Gestaltung an der Umfangsfläche also in Umfangsrichtung erfolgt. Dies hat den Vorteil, daß die Funktionsflächen ohne Doppelpassung geschaffen werden können. Denkbar ist aber auch, beide Funktionsflächen am Umfang des Lagerelements vorzusehen. Das Lagerelement ist bevorzugt einstückig hergestellt. Bevorzugt ist das Lagerelement ein Spritzgussteil, wird also im Spritzgussverfahren hergestellt.

Vorzugsweise ist ein solches Lagerelement derart gestaltet, daß der erste Dichtbereich und der erste Drehschlußbereich zumindest teilweise zusammenfallen, so daß ein erster Oberflächenbereich des ersten Drehschlußbereichs gleichermaßen als erste Dichtfläche des ersten Dichtbereichs ausgestaltet ist. Vorteile dieser Ausführungsform liegen insbesondere darin, daß die Funktionsflächen, die eine Dichtung sicherstellen, gleichzeitig auch der Verhinderung einer Relativbewegung zwischen den angrenzenden Bauteilen dient. Dadurch kann eine sehr kleine Bauform gewährleistet werden.

Vorzugsweise ist bei einem solchen Lagerelement der erste Oberflächenbereich so gestaltet, daß in einer Abwicklung einer Schnittebene, die im wesentlichen einer Zylinderfläche um eine Bezugsachse der aufzunehmenden Rollenachse entspricht und die durch den ersten Oberflächenbereich verläuft, eine Kurve entlang des Oberflächenverlaufs im wesentlichen entlang einer zickzackförmigen oder wellenförmigen, insbesondere einen sinusförmigen Kurve verläuft, so daß der erste Drehschlußbereich als erster Formschlußbereich ausgeführt ist. Dadurch wird eine Verdrehung der Bauteile sicher verhindert. Ein Anpressdruck zwischen den angrenzenden Teilen kann kleiner gewählt werden als bei einem Reibschluß, bei dem in Abhängigkeit von den Reibbeiwerten der angrenzenden Bauteile die Anpresskraft so bemessen werden muß, daß eine ausreichende Reibkraft resultiert.Durch diese Gestaltung wird ferner gewährleistet, daß zwei kongruente Flächen an den angrenzenden Bauteilen bereit gestellt werden, und daß beim Einbau der Bauteile ein dichtender Eingriff der Funktionsflächen bereits dann gewährleistet wird, wenn die Bauteile nur um wenige Grad gegeneinander verdreht eingebaut werden. Bei der Montage muß also nicht auf die genaue Ausrichtung der Bauteile zueinander geachtet werden.

Vorzugsweise ist der erste Oberflächenbereich des Lagerelements so gestaltet, daß die Ortskurven zumindest mancher Punkte auf der zickzackförmigen oder wellenförmigen Kurve entlang des Oberflächenverlaufs von der Bezugsachse im wesentlichen in radialer Richtung nach außen verlaufen. Diese Gestaltung hat den Vorteil, daß die Formen zur Herstellung der entsprechenden Bauteile einfach hergestellt werden können.

Gemäß einer vorteilhaften Ausführungsform weist ein solches Lagerelement den Dichtbereich umgebend eine Oberflächengestaltung auf, die als ein erster Teil einer Labyrinthdichtung ausgebildet ist. Eine weitere Labyrinthdichtung hat den Vorteil, das Schmutz oder Flüssigkeit nur erschwert bis zum ersten Dichtfbereich vordringen kann.

Vorteilhafterweise weist ein solches Lagerelement eine pilzähnliche Form mit einem Schirmelement und einem Stielelement auf, wobei der erste Dichtbereich auf der dem Stielelement abgewandten Seite des Schirmelements angeordnet ist. Die pilzähnliche Form hat den Vorteil einer flachen Bauwseise, wobei an dem schirmartigen Element verschiedene Dichtflächen vorgesehen werden können.

Vorteilhaft ist ferner wenn das Lagerelement eine pilzähnliche Form mit einem Schirmelement und einem Stielelement aufweist, wobei der zweite Dichtbereich auf der dem Stielelement zugewandten Seite des Schirmelements angeordnet ist. Das Vorsehen des zweiten Dichtbereichs auf der Lagerrahmenseite hat den Vorteil, daß das Stielelement als Formschlußbereich vorgesehen werden kann, der mit z.B. einem mehreckigen Ausnehmung im Lagerrahmen korrespondiert, die als solche schwierig abzudichten währe, während die Umgebung des Lagerrahmen eben und glatt ist und gut als Dichtfläche dienen kann.

Gemäß einer weiteren vorteilhaften Ausführungsform des Lagerelements wird der zweite Dichtbereich aus einer bevorzugt nachgiebigen Dichtlippe im Randbereich des Schirmelements und/oder aus einem bevorzugt weniger nachgiebigen Mittendichtbereich des Schirmelements gebildet, der im wesentlichen benachbart zum Stielelement angeordnet ist, wobei die nachgiebige Dichtlippe im nichteingebauten Zustand bevorzugt in lagerrahmenseitiger Richtung über den Mittendichtbereich hinaus vorsteht. Dies hat den Vorteil, daß die Dichtlippe sich leicht der Oberfläche des Lagerrahmens anpassen kann, auch wenn dieser eine unebene Oberfläche aufweist oder gebogen ist, und daß die Dichtlippe sich bereits ohne entsprechenden Anpreßdruck über ein benachbartes Bauteil beim Einsetzen in den Lagerrahmen elastisch verformt und eine Abdichtung gewährleistet.

Vorteilhafterweise weist ein solches Lagerelement auf der zweiten Seite bevorzugt im Bereich des Stielelements einen zweiten Formschlußbereich auf, wobei der zweite Formschlußbereich so gestaltet ist, daß eine Verdrehung des Lagerelements gegenüber einem auf der zweiten Seite angrenzenden zweiten Bauteil, insbesondere dem Lagerrahmen, verhindert wird. Hierdurch wird auch im zweiten Dichtbereich verhindert, daß über eine Relativdrehung zwischen Lagerelement und Lagerrahmen Schmutz oder Feuchtigkeit in das Innere des Lagerrahmens transportiert wird.

Bevorzugt ist bei einem solchen Lagerelement der zweite Formschlußbereich zumindest teilweise aus einem mehreckigen, bevorzugt sechseckigen Querschnittsbereich des Stielelements gebildet. Ein solcher sechseckiger Querschnittsbereich ist sowohl in Bezug auf das Lagerelement als auch in Bezug auf die korrespondierende Ausnehmung im Lagerrahmen einfach herzustellen

Gemäß einer weiteren vorteilhaften Ausführungsform ist bei einem solchen Lagerelement zumindest ein Halteelement vorgesehen, welches so gestaltet ist, daß es im in den Lagerrahmen eingesetzten Zustand einen korrespondierenden Haltebereich des Lagerrahmens derart hintergreift, daß das Lagerelement gegen herausfallen oder herausrutschen aus dem Lagerrahmen gesichert ist, wobei der Abstand zwischen dem Mittendichtbereich des Lagerelements und dem Halteelement des Lagerelements im wesentlichen gleich oder etwas kleiner ist als der Abstand dem Haltebereich des Lagerelements und einem mit dem Mittendichtbereich korrespondierenden Lagerrahmendichtbereich. Dies hat den Vorteil, daß beim Einsetzen des Lagerelements in den Lagerrahmen eine Spannung im Lagerelement gegeben ist, die bewirkt, daß der zweite Dichtbereich auf den korrespondierenden Lagerrahmendichtbereich gezogen wird.

Bevorzugt ist bei einem solchen Lagerelement die Achsaufnahme als Sackloch ausgebildet. Dies hat den Vorteil, daß ein solches Lagerelement bereits abdichtende Funktion hat, wenn noch keine Rollenachse in die Achsaufnahme eingesetzt ist bzw. noch kein benachbartes Bauteil mit einer zu der ersten Dichtfläche korrespondierenden Dichtfläche vorgesehen ist.

Besonders vorteilhaft ist bei einem solchen Lagerelement die Achsaufnahme als Durchgangsloch ausgebildet. Diese Variante ist einfach und billiger herzustellen als ein Sackloch. Außerdem kann durch das Durchgangsloch eine gefederte Rollenachse in das Rolleninnere gedrückt werden, so daß eine Transportrolle einfach ausgebaut werden kann.

Vorteilhaft ist ferner, wenn bei einem solchen Lagerelement die Achsaufnahme in Bezug auf eine aufzunehmende Rollenachse derart bemessen ist, daß zwischen der Rollenachse und der Achsaufnahme eine Passung erzeugt wird, die eine Drehung zwischen Rollenachse und Lagerelement erschwert oder verhindert. Gerade bei nicht angetriebenen Rollen reicht eine solche (Press-)Passung zur Übertragung auftretender Drehmomente, und eine solche Passung ist günstiger herzustellen als ein zusätzlicher Formschlußbereich. Außerdem hat eine solche Passung eine zusätzliche dichtende Funktion.

Bevorzugt weist bei einem solchen Lagerelement die Achsaufnahme einen dritten Formschlußbereich auf, der mit einem Achsbereich der Rollenachse korrespondiert und so gestaltet ist, daß eine Drehung zwischen Rollenachse und Lagerelement erschwert oder verhindert wird. Diese Gestaltung hat den Vorteil, daß auch größere Drehmomente übertragen werden können, ohne daß sich die Rollenachse mitdreht.

Es ist ferner bevorzugt, wenn ein solches Lagerelement aus einem Material hergestellt wird, das schwingungsdämpfende und/oder geräuschdämpfende und/oder elektrisch leitende Eigenschaften hat, bevorzugt aus Polypropylen oder aus Polyamid. Besonders bevorzugt ist als Material ein Polyamid mit elektrisch leitenden Eigenschaften. Durch ein solches Lagerelement wird die Transportrolle vom Lagerrahmen schwingungstechnisch isoliert sowie Stöße und Vibrationen gedämpft. Geräusche werden verringert und der Streckenförderer kann mit höheren Geschwindigkeiten betrieben werden. Die elektrostatische Aufladung der Transportrolle kann durch die bevorzugte leitende Eigenschaft über den Lagerrahmen abgeleitet werden.

Ein weiterer Aspekt der Erfindung betrifft ein Rollenschild zur stirnseitigen Abdeckung einer Transportrolle eines Streckenförderers, welcher ein Achsloch zur Aufnahme einer Rollenachse, einen Schilddichtbereich und einen Schildformschlußbereich aufweist, der so gestaltet ist, daß eine Verdrehung des Rollenschildes gegenüber einem angrenzenden Bauteil, insbesondere gegenüber einem oben beschriebenen Lagerelement verhindert werden kann.

Vorteilhafterweise fallen bei einem solchen Rollenschild der Schilddichtbereich und der Schildformschlußbereich zumindest teilweise zusammen, so daß ein Schildoberflächenbereich des ersten Schildformschlußbereichs gleichermaßen als Schilddichtfläche des ersten Schilddichtbereichs ausgestaltet ist. Die Vorteile einer solchen Gestaltung entsprechen denen, die in Bezug auf das Lagerelement geschildert wurden.

Bevorzugt ist ferner ein solches Rollenschild, wobei der Schildoberflächenbereich so gestaltet ist, daß in einer Abwicklung einer Schnittebene, die im wesentlichen einer Zylinderfläche um eine Bezugsachse der aufzunehmenden Rollenachse entspricht und die durch den Schildoberflächenbereich verläuft, eine Kurve entlang des Schildoberflächenverlaufs im wesentlichen entlang einer zickzackförmigen oder wellenförmigen, insbesondere einer sinusförmigen Kurve verläuft. Die Vorteile einer solchen Gestaltung entsprechen denn, die in Bezug auf das Lagerelement geschildert wurden.

Ebenfalls bevorzugt ist ein solches Rollenschild, bei dem der Schildoberflächenbereich so gestaltet ist, daß die Ortskurven zumindest mancher Punkte auf der zickzackförmigen oder wellenförmigen Kurve entlang des Schildoberflächenverlaufs von der Bezugsachse im wesentlichen in radialer Richtung nach außen verlaufen. Die Vorteile einer solchen Gestaltung entsprechen denen, die in Bezug auf das Lagerelement geschildert wurden.

Vorteilhaft ist bei einem solchen Rollenschild, wenn dieses den Schilddichtbereich umgebend eine Oberflächengestaltung aufweist, die als ein zweiter Teil einer Labyrinthdichtung ausgebildet ist. Die Vorteile einer solchen Gestaltung entsprechen denen, die in Bezug auf das Lagerelement geschildert wurden.

Vorteilhaft ist ferner, wenn bei einem solchen Rollenschild das Achsloch zumindest eine Rollenachsen-Anlagefläche aufweist, die derart gestaltet ist, daß der Rollenschild mit dem Außendurchmesser einer korrespondierenden Rollenachse eine Passung bildet, die es ermöglicht, der Rollenschild ohne wesentliches Spiel auf der Rollenachse in axialer Richtung verschieblich zu lagern. Dadurch kann der Rollenschild auf das Lagerelement gedrückt werden, um so die Dichtfunktion herzustellen.

Ebenfalls vorteilhaft ist ein solcher Rollenschild, bei dem das Achsloch zumindest einen Kraftspeicheranschlag aufweist, der so gestaltet ist, daß ein Kraftspeicher an dem Kraftspeicheranschlag angreifen kann, um den Rollenschild auf einer Rollenachse in axialer Richtung zu verschieben, wobei der Kraftspeicheranschlag bevorzugt als erste oder zweite Rollenachsen-Anlagefläche ausgebildet ist. So wird gewährleistet, daß der Rollenschild permanent auf das Lagerelement gedrückt wird, so daß die Dichtfunktion permanent gewährleistet wird. Ferner kann ein axiales Spiel zwischen der Transportrolle und dem Lagerrahmen ausgeglichen werden sowie eine fehlende Parallelität der Profile ausgeglichen werden.

Bei einer bevorzugten Ausführungsform erstreckt sich bei einem solchen Rollenschild das Achsloch durch einen Achslochfortsatz des Rollenschildes, wobei der Achslochfortsatz auf der Außenseite eine Rollenlager-Lagerfläche aufweist, die derart gestaltet ist, daß der Rollenschild mit dem Innendurchmesser eines korrespondierenden Rollenlagers eine Passung bildet, die es ermöglicht, den Rollenschild ohne wesentliches Spiel in dem Rollenlager in axialer Richtung verschieblich zu lagern. Hierbei ist vorteilhaft, daß über die Breite der Rollenlager-Lagerfläche ein Verkippen des Rollenschildes verhindert wird, wobei eine Verschieblichkeit des Rollenschildes beibehalten wird.

Bevorzugt ist ferner, wenn bei einem solchen Rollenschild das Achsloch einen vierten Formschlußbereich aufweist, der mit einem Achsbereich der Rollenachse korrespondiert und so gestaltet ist, daß eine Drehung zwischen Rollenachse und Lagerelement verhindert wird wobei eine Verschiebung der Rollenachse zum Rollenschild in axialer Richtung möglich bleibt.

Ein weiterer Aspekt der Erfindung betrifft eine Transportrolle, die zumindest ein Rollenaußenrohr, zumindest ein oben beschriebenes Rollenschild, zumindest ein Rollenlager, das bevorzugt ein Wälzlager aufweist, zumindest eine Rollenachse und zumindest einen ersten Kraftspeicher, der bevorzugt eine erste Spiralfeder aufweist, umfaßt, wobei der Kraftspeicher derart gestaltet und angeordnet ist, daß er den Rollenschild mit einer Kraft beaufschlagt, die dazu geeignet ist, der Rollenschild auf der Rollenachse relativ zum Rollenaußenrohr zu verschieben.

Bevorzugt ist bei einer solchen Transportrolle zumindest eine Rollenachse relativ zum Rollenaußenrohr verschieblich angeordnet und durch einen zweiten Kraftspeicher, der bevorzugt eine zweite Spiralfeder umfaßt, mit einer Kraft beaufschlagt, die dazu geeignet ist, die Rollenachse relativ zum Rollenaußenrohr nach außen zu drücken.

Vorteilhaft ist es, wenn eine solche Transportrolle zwei Rollenschilder und zwei Rollenachsen aufweist, von denen nur jeweils eines der Rollenschilder und eine der Rollenachsen verschieblich und mit Kraft beaufschlagt ist. Diese Ausführungsform ist billiger herzustellen als wenn beide Rollenschilder und beide Rollenachsen gefedert wären. Dennoch wird gewährleistet, daß auf beiden Seiten der Transportrolle Formschluß und Dichtung zwischen Rollenschildern und Lagerelementen gewährleistet sind.

Ein weiterer Aspekt der Erfindung betrifft einen Streckenförderer, welcher zumindest einen Lagerrahmen, zumindest eine beschriebene Transportrolle und zumindest ein Lagerelement aufweist, wobei das Lagerelement in eine korrespondierende Ausnehmung des Lagerrahmens eingesetzt ist, die Rollenachse der Transportrolle in der Achsaufnahme des Lagerelements aufgenommen ist und der Rollenschild über den Kraftspeicher derart auf das Lagerelement gedrückt wird, daß der erste Dichtbereich des Lagerelements mit dem Schilddichtbereich des Rollenschildes, der erste Formschlußbereich des Lagerelements mit dem Schildformschlußbereich des Rollenschildes und der zweite Dichtbereich des Lagerelements mit dem Lagerrahmendichtbereich in Kontakt stehen.

### Kurze Beschreibung der Zeichnungen

Im folgenden werden einzelne besonders bevorzugte Ausführungsformen der Erfindung beispielhaft beschrieben. Dabei weisen die einzelnen beschriebenen Ausführungsformen zum Teil Merkmale auf, die nicht zwingend erforderlich sind, um die vorliegende Erfindung auszuführen, die aber im Allgemeinen als bevorzugt angesehen werden. So sollen auch Ausführungsformen als unter die Lehre der Erfindung fallend offenbart angesehen werden, die nicht alle Merkmale der im folgenden beschriebenen Ausführungsformen aufweisen. Genauso ist es denkbar, Merkmale, die in Bezug auf unterschiedliche Ausführungsformen beschrieben werden, selektiv miteinander zu kombinieren.

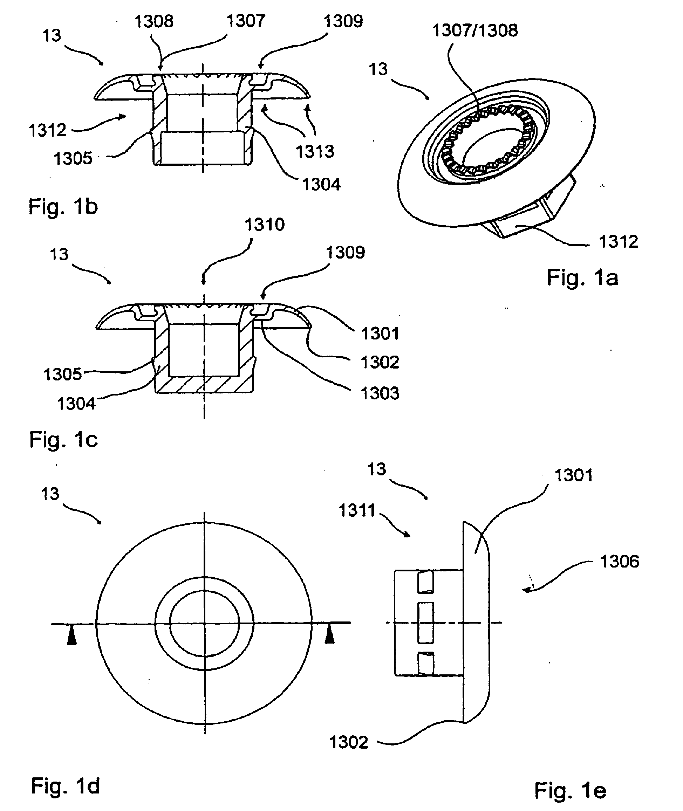

- Fig. 1b und 1c: zeigen zwei Querschnitte durch zwei bevorzugte Ausführungsformen eines erfindungsgemäßen Lagerelements - eines mit einer durchgehenden Achsaufnahme und eines mit einer sacklochartigen Achsaufnahme.
- Fig. 1a, 1d und 1e: zeigen, die in Fig. 1b und 1c dargestellten Ausführungsformen des Lagerelements als Draufsicht, Seitenansicht und als isometrische Ansicht.
- Fig. 2: zeigt einen teilweise im Querschnitt dargestellten Streckenförderer gemäß der Erfindung.
- Fig. 3a bis 3c: zeigen eine erfindungsgemäße Transportrolle in verschiedenen Ansichten.
- Fig. 3d: zeigt einen vergrößerten Ausschnitt des Rollenschildes, der in Fig. 3c mit einem Kreis markiert ist.
- Fig.4: zeigt eine Ausführungsform eines Rollenschildes gemäß der Erfindung.
- Fig. 5a bis 5d: zeigen eine weitere Ausführungsform eines Lagerelements in verschiedenen Ansichten und Schnitten.
- Fig. 6a bis 6d: zeigen eine weitere Ausführungsform eines Rollenschildes in verschiedenen Ansichten und Schnitten.
- Fig. 7a bis 7d: zeigen das in Figuren 5a bis d gezeigte Lagerelement sowie das in Figuren 6a bis 6d gezeigte Rollenschild in dichtendem Kontakt.

### Detaillierte Beschreibung der Zeichnung

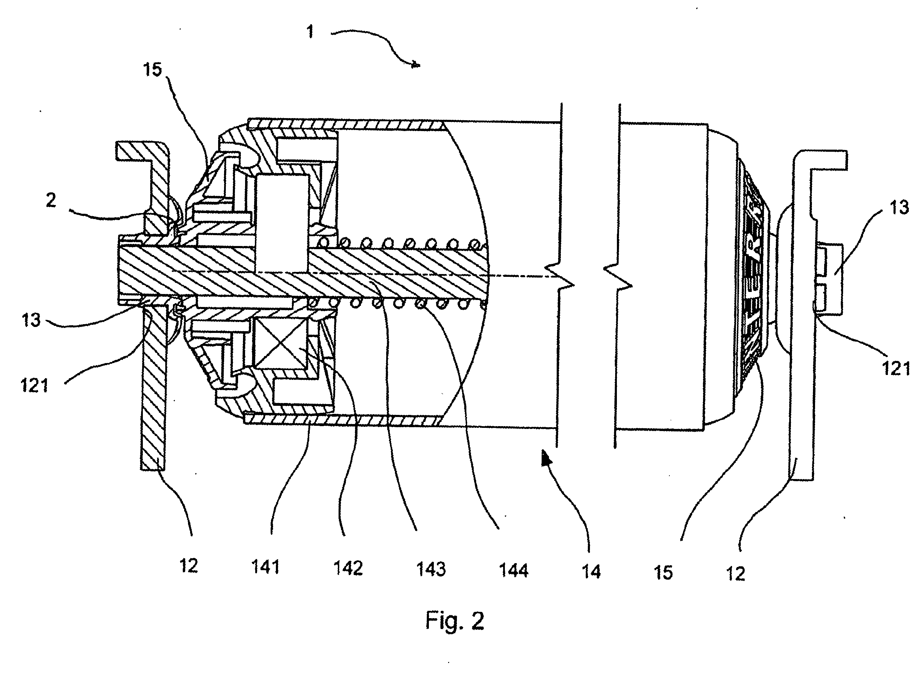

Die Figur 2 zeigt einen teilweise im Querschnitt dargestellten Streckenförderer 1 gemäß der Erfindung. Der Streckenförderer 1 weist auf der im Bild links und rechts dargestellten Seite jeweils einen Lagerrahmen 12 auf. Der Lagerrahmen 12 ist in der Zeichnung als L-förmiges Profil dargestellt. Er kann aber auch als U-förmiges Profil ausgeführt werden, das auf einer Seite eine Abdeckung aufweist, so daß der Lagerrahmen ein geschlossenes Profil darstellt. Ebenfalls ist es denkbar, daß andere Profilquerschnitte zur Anwendung kommen.

Weiterhin weist der Streckenförderer 1 eine Transportrolle 14 auf, die ein Rollenaußenrohr 141, ein Rollenlager 142, eine Rollenachse 143, einen ersten Kraftspeicher 144 und einen nicht gezeigten zweiten Kraftspeicher aufweist. In einem Streckenförderer 1 können entweder mehrere nebeneinander angeordnete Transportrollen 14 vorgesehen werden, auf dem die zu transportierenden Güter unmittelbar aufliegen. Denkbar ist ebenfalls, daß über die Transportrollen ein Band geführt wird.

Das Rollenlager 142 ist in der dargestellten Ausführungsform als Wälzlager ausgeführt. Denkbar sind auch andere Lager, wie z.B. Gleitlager.

Die Rollenachse 143 kann als einstückige Rollenachse ausgeführt sein, die sich über die gesamte Breite der Transportrolle erstreckt und an beiden Seiten der Transportrolle 14 aus dieser herausragt. Bevorzugt ist aber, wenn zwei Rollenachsen 143 vorgesehen sind. Auf diese Art und Weise können beide Rollenachsen, bevorzugt aber nur eine Rollenachse 143, verschieblich gelagert sein, so daß die Rollenachse gegen einen zweiten Kraftspeicher, der bevorzugt aus einer Spiralfeder gebildet wird, und in der dargestellten Zeichnung nicht gezeigt ist, in Richtung des Rolleninneren der Transportrolle gedrückt werden kann. Bei dieser Konstruktion kann eine solche Transportrolle 14 leicht in den Lagerrahmen 12 eingesetzt und aus diesem entnommen werden, da die gefederte Rollenachse 143 erst in das Innere der Transportrolle 14 gedrückt werden kann und nach dem Einsetzen in den Streckenförderer in die Achsaufnahme 1310 eines Lagerelements 13 zurückfedern kann.

Wie in Figur 2 ersichtlich ist, weist der Streckenförderer 1 ferner zwei Rollenschilder 15 auf, die auf der linken und auf der rechten Seite der Transportrolle 14 angeordnet sind. Das aus der linken Seite gezeigte Rollenschild 15 ist auf der Rollenachse 143 verschieblich gelagert und wird über einen ersten Kraftspeicher 144, der in der gezeigten Ausführungsform durch eine Spiralfeder gebildet wird, mit einer Kraft beaufschlagt. Dadurch wird der Rollenschild 15 auf der Rollenachse 143 in Richtung des Lagerelementes 13, das in Figur 2 auf der linken Seite gezeigt ist, gedrückt. Der erste Kraftspeicher 144 kann anstelle einer Spiralfeder auch durch eine Blattfeder, eine Tellerfeder, durch einen Gummipuffer und/oder durch beliebige andere Kraftspeicher gebildet werden.

Durch die Kraft, die durch den ersten Kraftspeicher 144 auf den Rollenschild 15 übertragen wird, und durch die der Rollenschild 15 nach links auf das ebenfalls in Figur 2 dargestellte Lagerelement 13 gedrückt wird, kommen korrespondierende Bereiche des Lagerelementes 13 und des Rollenschildes 15 in Kontakt. Ferner wird das Lagerelement 13 auf dem Lagerrahmen 12 gedrückt.

Dasselbe trifft auch in Bezug auf das in Figur 2 dargestellte rechte Rollenschild 15 zu. Allerdings wird es in der Regel ausreichen, wenn bei einer Transportrolle 14 nur eines der beiden Rollenschilder mit einer Kraft beaufschlagt wird, weil diese Kraft in beide Richtungen wirkt und so auch das rechte Rollenschild 15 mit dem rechten Lagerelement 13 in Kontakt steht und auch das rechte Lagerelement 13 über das recht Rollenschild 15 auf den rechten Lagerrahmen 12 gedrückt wird.

Die Art des Kontaktes zwischen dem Lagerelement 13 und dem Rollenschild 15 sowie zwischen Lagerelement 13 und Lagerrahmen 12 bewirkt eine Abdichtung zwischen den Elementen. Diese Abdichtung kommt dadurch zustande, daß zum einen vorgesehene Dichtflächen miteinander in Eingriff stehen und daß zum anderen eine Relativdrehung zwischen den Teilen verhindert wird, so daß über eine Relativdrehung keine Feuchtigkeit oder kein Staub entlang der Dichtflächen eindringen kann.

Die korrespondierenden Dicht- und Formschlußbereiche des Lagerelements 13 des Lagerrahmens 12 und des Rollenschildes 15 werden im folgenden näher beschrieben.

Das Lagerelement 13 ist detailliert in Figuren 1a bis 1e dargestellt. Figur 1 a zeigt das Lagerelement 13 in einer isometrischen Ansicht. Wie in dieser Figur ersichtlich ist, weist das Lagerelement 13 bevorzugt eine pilzförmige Form auf mit einem Schirmelement 1301 und einem Stielelement 1304. Wie in der Figur 1a gut ersichtlich ist, weist diese bevorzugte Ausführungsform des Lagerelementes 13 ein sechseckiges Stielelement 1304 auf. Das Stielelement 1304 weist in dieser bevorzugten Ausführungsform also einen zweiten Formschlußbereich 1312 auf, der durch diese sechseckige Gestaltung des Stielelementes gebildet wird. Das Stielelement kann in eine entsprechende sechseckige Ausnehmung des Lagerrahmens 12 eingesetzt werden, so daß sich das Lagerelement 13 im Lagerrahmen 12 nicht drehen kann.

Ferner weist das Lagerelement 13 am Stielelement 1304 Halteelemente 1305 auf, die, wenn das Lagerelement 13 in den Lagerrahmen 12 eingesetzt ist, entsprechende Haltebereiche 121 des Lagerrahmens hintergreifen können, so daß das Lagerelement 13 gegen Herausfallen oder Herausrutschen aus dem Lagerrahmen 12 gesichert ist. Die Haltelemente 1305 gewährleisten ferner, daß auch der zweite Dichtbereich 1313 mit dem Lagerrahmen 12 in dichtendem Eingriff gehalten wird, wie unten näher beschrieben wird.

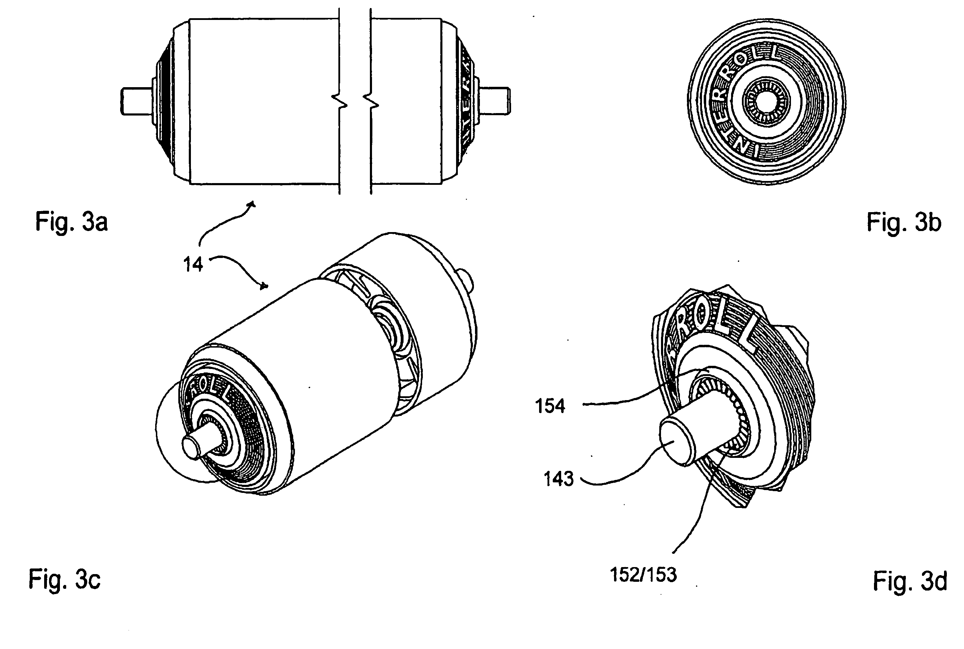

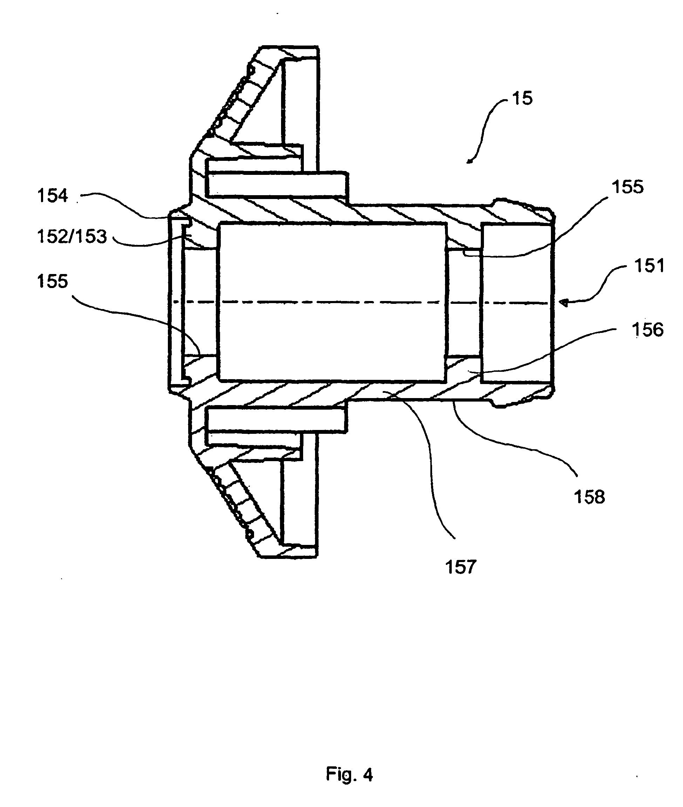

Auf der dem Stielelement abgewandten Seite des Schirmelements 1301 ist ein wellenförmig verlaufender Dicht- und Formschlußbereich 1307a, 1308 vorgesehen. In der dargestellten Ausführungsform fällt also in vorteilhafter Weise der erste Dichtbereich 1308 mit dem ersten Formschlußbereich 1307a zusammen. Die so gebildeten Oberflächenbereiche korrespondieren mit einem entsprechenden Schilddichtbereich 152 und einem entsprechenden Schildformschlußbereich 153a des Rollenschildes 15, die in Figur 3d und 4 dargestellt sind.

Die korrespondierenden Bereiche sind so gestaltet, daß die Bereiche flächig aneinander anliegen, wenn ein Kontakt zwischen den Teilen zustande kommt. Über eine entsprechende Andruckkraft, die über den ersten Kraftspeicher 144 bereitgestellt wird, werden eventuell vorliegende minimale Unebenheiten der Oberflächen glattgedrückt, so daß keine Fluide die Dichtflächen passieren können.

Dichtbereiche und Formschlußbereiche müssen nicht zusammenfallen sonder können auch getrennt ausgebildet sein. Dies hätte den Vorteil, daß bei der Herstellung weniger genaue Toleranzen eingehalten werden müßten. Eine Dichtfläche könnte in einer Ebene liegend vorgesehen werden, wodurch diese einfacher herzustellen wäre als eine Oberfläche mit Krümmungen, wie in der dargestellten Ausführungsform. Die dargestellte Ausführungsform ist aber platzsparend auszuführen und erfordert keine Doppelpassung, wie sie eventuell bei getrennten Dicht- und Formschlußbereichen erforderlich wäre.

Wie in Figur 2 dargestellt ist, wird der Dicht- und Formschlußbereich von einer Labyrinthdichtung 2 umgeben. Diese Labyrinthdichtung 2 wird aus zwei korrespondierenden Teilen des Lagerelements 13 auf der einen Seite und des Rollenschildes 15 auf der anderen Seite gebildet. Diese beiden Teile der Labyrinthdichtung 2 werden in den Figuren 1b und 1c mit dem Bezugszeichen 1309 und in den Figuren 3d und 4 mit dem Bezugszeichen 154 bezeichnet. Durch diese Labyrinthdichtung wird Feuchtigkeit und Staub von dem Vordringen bis zu den Dicht- und Formschlußbereichen gehindert.

Auf der zweiten Seite 1311 des Lagerelements 13 ist ein zweiter Dichtbereich 1313 vorgesehen, der in der dargestellten Ausführungsform durch eine Dichtlippe 1302 und durch einen Mittendichtbereich 1303 ausgebildet ist. Die Dichtlippe 1302 ist bevorzugt nachgiebiger als der Mittendichtbereich 1303 ausgeführt, so daß sich die Dichtlippe 1303 an korrespondierende Dichtbereiche des Lagerrahmens 12 anschmiegt, wenn das Lagerelement 13 in eine entsprechende Ausnehmung des Lagerrahmens 12 eingesetzt wird und über den Kraftspeicher 144 mittels des Rollenschildes 15 an den Lagerrahmen 12 gedrückt wird. Dagegen kann der Mittendichtbereich einer Andruckkraft, die aus der eingebrachten Kraft des Kraftspeichers 144 resultiert, widerstehen und aufgrund der Andruckkraft zu einer verbesserten Dichtigkeit beitragen.

Über die Halteelemente 1305 kann eine entsprechende Dichtwirkung bereits zustandekommen, ohne daß eine Kraft über den Kraftspeicher 144 auf das Lagerelement 13 übertragen wird. Bevorzugt ist dabei, wenn das Stielelement 1304 des Lagerelements 13 eine gewisse Eigenelastizität aufweist, so daß über entsprechend gewählte Abmessungen zwischen Halteelement 1305 und dem Mittendichtenbereich 1303 einerseits und der entsprechenden Materialstärke des Lagerrahmens 12 eine Spannung im Lagerelement 13 erzeugt wird. Über diese Spannung schmiegt sich die Dichtlippe 1302 und/oder der Mittendichtbereich 1303 an den Lagerrahmen 12 an, auch wenn die Transportrolle 14 noch nicht in den Lagerrahmen 12 eingesetzt ist.

In diesem Fall ist es besonders bevorzugt, wenn das Lagerelement 13 eine sacklochartige Achsaufnahme 1310 aufweist, da in diesem Fall auch ohne eingesetzte Rollenachse bzw. Transportrolle 14 das Profil, das durch den Lagerrahmen 12 gebildet wird, abgedichtet ist.

Andererseits hat ein Lagerelement 13, das eine durchgehende Achsaufnahme 1310 aufweist, den Vorteil, daß z.B. eine gefederte Rollenachse 143 beim Ausbau der Transportrolle 14 von hinten durch das Lagerelement 13 hindurchgedrückt werden kann und so einfach auszubauen ist.

Ein weiterer bevorzugter Aspekt des Lagerelementes 13 betrifft eine schwingungsdämpfende Eigenschaft des Lagerelements 13. Bevorzugt ist das Lagerelement aus Polypropylen und noch bevorzugter aus Polyamid hergestellt. Über die Materialeigenschaften wird ein Kontakt von Stahl auf Stahl zwischen Rollenachse 143 und Lagerrahmen 12 vermieden. Durch diese Gestaltung des Lagerelementes 13 werden Vibrationen gedämpft und somit Belastungen der Bauteile verringert. Dies führt zu einer längeren Lebensdauer der Teile. Außerdem werden Geräusche vermieden. Und auch empfindliche Güter, die auf dem Streckenförderer 1 befördert werden sollen, können bei höheren Geschwindigkeiten transportiert werden, als dies bei Streckenförderern ohne entsprechende Lagerelemente der Fall wäre.

Figur 4 zeigt einen Rollenschild 15 im Querschnitt. Mit den Bezugzeichen 155 werden Rollenachsenanlagenflächen des Rollenschildes im Achsloch 151 bezeichnet. Über diese Rollenachsenanlagenflächen 155 wird der Rollenschild 15 auf der Rollenachse 143 gelagert. Dabei wird bevorzugt über eine entsprechende Passung zwischen dem Rollenschild 15 und der Rollenachse 143 gewährleistet, daß das Rollenaußenrohr 141 der Transportrolle 14 über das Rollenlager 142 und entsprechende zwischengeschaltete Bauteile über den Rollenschild 15 bevorzugt spielfrei auf der Achse gelagert werden.

Die Passung zwischen Rollenschild 15 und Rollenachse 143 ist daher bevorzugt so bemessen, daß zum einen eine spielfreie Lagerung der Transportrolle 14 gewährleistet ist und andererseits der Rollenschild 15 auf der Rollenachse 143 verschieblich ist und von dem Kraftspeicher 144 auf das Lagerelement 13 und den Lagerrahmen 12 hin verschoben werden kann.

Gleiches gilt für eine Passung zwischen der Rollenlager-Lagerfläche 158 und dem Rollenlager 142. Auch zwischen diesen beiden Bauteilen wird bevorzugt eine spielfreie Lagerung gewährleistet, und auch hier ist eine Verschieblichkeit zwischen dem Rollenlager 142 und dem Rollenschild 15 vorteilhaft.

Der Rollenschild 15 ist in Figur 4 mit einem zusätzlichen Kraftspeicheranschlag 156 dargestellt. Der Kraftspeicheranschlag 156 bietet zum einen dem ersten Kraftspeicher 144 eine Angriffsfläche, über die der Rollenschild 15 auf das Lagerelement 13 gedrückt werden kann. Zum anderen weist der Kraftspeicheranschlag 156 in der dargestellten Ausführungsform eine weitere Rollenachsenanlagefläche 155 auf. Diese zweite Rollenachsenanlagefläche 155 verhindert ein Verkippen des Rollenschildes 15 auf der Rollenachse 143. Da der Rollenschild 15 in der dargestellten Ausführungsform eine Hinterschneidung zwischen den beiden Rollenachsenanlagenflächen 155 auf der linken und auf der rechten Seite im Bild aufweist, ist ein solcher Rollenschild 15 nur schwer im Spritzgußverfahren herstellbar. Denkbar ist daher ebenfalls, einen solchen Rollenschild 15 mit einer durchgehenden Rollenachsenanlagefläche 155 auszuführen. Bevorzugt ist aber, nur eine Rollenachsenanlagefläche 155 auf der linken Seite vorzusehen. In diesem Fall könnte der Kraftspeicher 144 an der links im Bild dargestellten Anschlagfläche angreifen. Ein Verkippen des Rollenschildes 15 auf der Rollenachse 143 wird in diesem Fall über die Passung zwischen dem Rollenschild 15 und dem Rollenlager 142 verhindert.

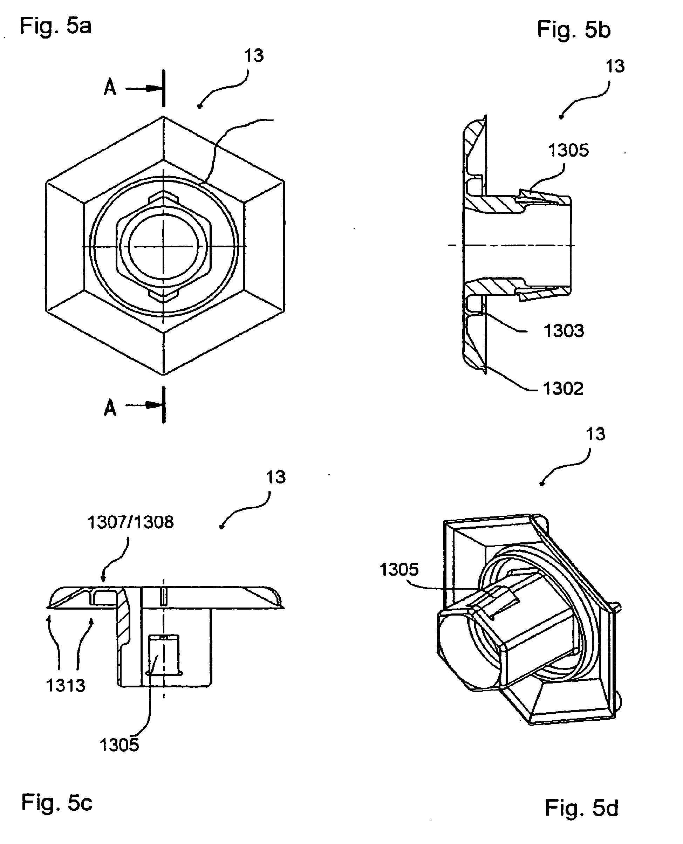

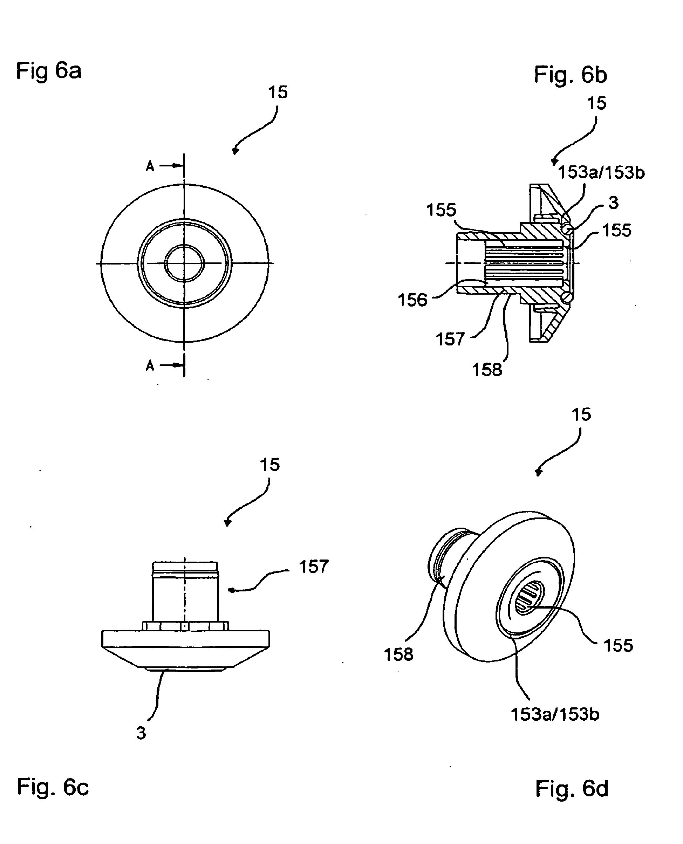

Eine weitere Ausführungsform der Erfindung ist in Figuren 5 bis 7 dargestellt und wird im Folgenden beschrieben.

Die Ausführungsform ähnelt stark der eben beschriebenen. Um unnötige Wiederholungen zu vermeiden wird daher nur auf die Merkmale eingegangen, die gegenüber der bereits beschriebenen Ausführungsform neue Aspekte bieten. Die Bezugszeichen, die im wesentlich gleiche Merkmale bezeichnen wurden beibehalten.

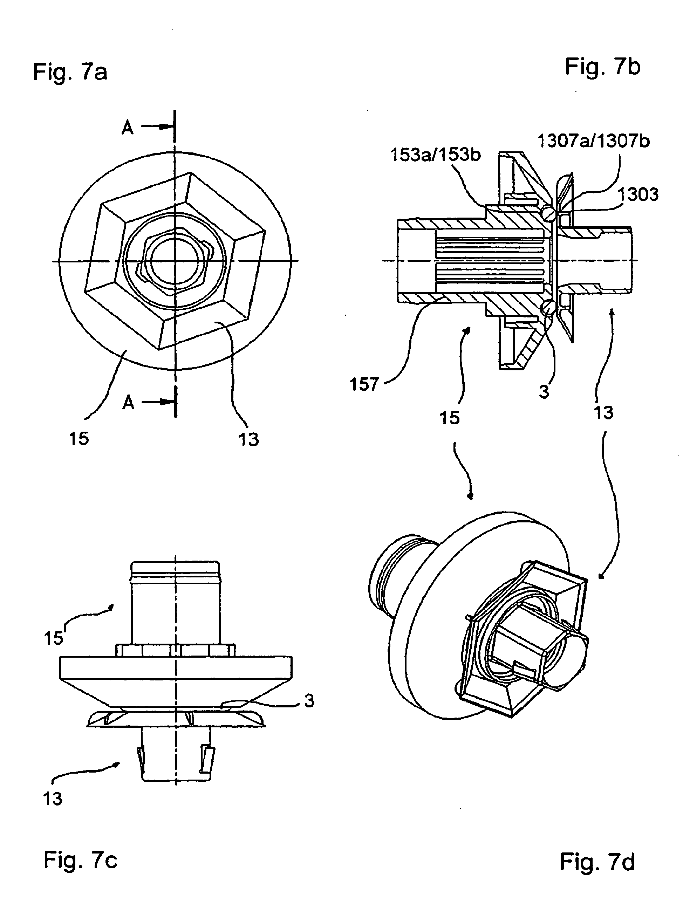

Der Drehschlußbereich des Lagerelements 13 ist in dieser Ausführungsform als Reibschlußbereich 1307b ausgeführt. Auf der ersten Seite 1306 des Lagerelements 13 ist in dieser Ausführungsform kein Formschluß vorgesehen. Eine Verdrehung des Lagerelements gegenüber dem angrenzenden Rollenschild 15 wird über den Anpreßdruck zwischen den betreffenden Bauteilen und gegebenenfalls zusätzlich über einen dazwischen befindlichen O-Ring 3 verhindert, wie in Figuren 7a und 7c gut ersichtlich. Der O-Ring ist in einer Nut im Rollenschild 15 angeordnet. Der Drehschlußbereich ist als Reibschlußbereich 1307b wie ersichtlich in einem bevorzugt konkav ausgebildeten Grund der Nut vorgesehen.

Die Nut hat wie dargestellt eine bevorzugt im wesentliche einem Teilkreis entsprechende Querschnittsform, die etwas größer ist als der Querschnittsdurchmesser des O-Rings 3. Auf der der Rollenachse zugewandten Seite der Nut ragt der Rand der Nut etwas in Richtung des O-Rings vor, so daß eine leichte Hinterschneidung gebildet wird, die verhindert, daß der O-Ring 3 im nicht zusammengebauten Zustand aus der Nut rutschen kann und in dieser somit sicher gehalten wird. Alternativ kann die Nut auch an dem Lagerelement 13 vorgesehen werden.

Je nach zu übertragendem Drehmoment muß die Andruckkraft, die über den ersten Kraftspeicher 144 auf den Rollenschild 15 übertragen wird so bemessen werden, daß sich unter Berücksichtigung des Reibbeiwertes zwischen den Materialien des Rollenschildes 15 bzw. des Lagerelements 13 eine entsprechende Reibkraft in Umfangsrichtung ergibt.

Wie insbesondere in Figuren 7b und 7c ersichtlich ist, befinden sich bei dieser Ausführungsform der Rollenschild 15 und das Lagerelement 13 nicht in unmittelbarem Berührungskontakt. Die Andruckkraft ist also nicht groß genug, um den O-Ring, der elastischer ist als der Rollenschild 15 und das Lagerelement 13, so weit zusammen zu drücken, daß der Rollenschild 15 und das Lagerelement 13 in direkte Berührung kommen.

Es ist aber denkbar, daß die Abmessungen der Bauteile und die Andruckkraft so gewählt werden, daß der O-Ring so weit zusammen gedrückt wird, daß der Rollenschild und das Lagerelement in Berührung kommen. Eine solche Berührungsfläche kann als eine weitere Dichtfläche zwischen Rollenschild 15 und Lagerelement 13 dienen. Ferner ist auch denkbar, daß der O-Ring gänzlich weggelassen wird und Reibschlußbereich 1307b bzw. Schildreibschlußbereich 153b direkt miteinander in Kontakt kommen. Ferner ist denkbar, daß der beschriebene O-Ring 3 mit einer entsprechenden Nut an einem der Bauteile bei der zuerst beschriebenen Ausführungsform zusätzlich zu dem dort beschriebenen Formschlußbereich 1307a bzw. dem Schildformschlußbereich 153a vorgesehen wird.

Wie in Figuren 5a bis 5d gezeigt ist, ist das Halteelement 1305 in der gezeigten Ausführungsform in Form einer elastischen Lasche ausgebildet, die beim Einsetzen des Lagerelements 13 in den Lagerrahmen 12 zunächst ausweichen und anschließend elastisch zurückfedern kann, um so den Haltebereich 121 des Lagerrahmens zu hintergreifen. Eine solche Ausführung des Halteelements 1305 kann auch bei der zuerst geschilderten Ausführungsform vorgesehen werden.

Wie in Figur 7b ersichtlich ist, wird die Andruckkraft im zusammengebauten Zustand der Bauteile vom Rollenschild 15 über den O-Ring 3 auf das Lagerelement 13 übertragen. In der dargestellten bevorzugten Ausführungsform drückt der O-Ring 3 auf einen Reibschlußbereich 1307b des Lagerelements 13 auf dessen Rückseite direkt hinter diesem Bereich ein ringförmiger Mittendichtbereich 1303 ausgebildet ist, der etwas von dem Stielelement 1304 beabstandet ist. Daher wird die Andruckkraft gut auf diesen Mittendichtbereich 1303 übertragen, was zu einer guten Dichtwirkung führt.

### Bezugszeichenliste

- 1: Streckenförderer

- 12: Lagerrahmen
- 121: Haltebereich des Lagerrahmens

- 13: Lagerelement

- 1301: Schirmelement
- 1302: Dichtlippe
- 1303: Mittendichtbereich
- 1304: Stielelement
- 1305: Halteelement

- 1306: erste Seite des Lagerelements
- 1307a: erster Formschlußbereich
- 1307b: Reibschlußbereich
- 1308: erster Dichtbereich
- 1309: erster Teil einer Labyrinthdichtung
- 1310: Achsaufnahme

- 1311: zweite Seite des Lagerelements
- 1312: zweiter Formschlußbereich
- 1313: zweiter Dichtbereich

- 14: Transportrolle

- 141: Rollenaußenrohr
- 142: Rollenlager
- 143: Rollenachse
- 144: erster Kraftspeicher (Rollenschild)

- 15: Rollenschild

- 151: Achsloch zur Aufnahme einer Rollenachse
- 152: Schilddichtbereich
- 153a: Schildformschlußbereich
- 153b: Schildreibschlußbereich
- 154: zweiter Teil einer Labyrinthdichtung
- 155: Rollenachsen-Anlagefläche im Achsloch
- 156: Kraftspeicheranschlag
- 157: Achslochfortsatz des Rollenschildes
- 158: Rollenlager-Lagerfläche

- 2: Labyrinthdichtung

- 3: O-Ring

## Patentansprüche

1. Lagerelement (13) mit Dichtfunktion zur Aufnahme einer zu lagernden Rollenachse (143) und zum Einsetzen in einen Lagerrahmen (12), welches auf einer ersten Seite (1306) eine Achsaufnahme (1310), einen ersten Dichtbereich (1308) aufweist, **dadurch gekennzeichnet, dass** das Lagerelement einen Drehschlußbereich (1307a; 1307b) aufweist, wobei der Drehschlußbereich (1307a; 1307b) derart gestaltet ist, daß eine Verdrehung des Lagerelements (13) gegenüber einem auf der ersten Seite angrenzenden Bauteil verhindert werden kann, und das auf einer im wesentlichen der ersten Seite (1306) gegenüberliegenden zweiten Seite (1311) des Lagerelements (13) einen zweiten Dichtbereich (1313) zur Abdichtung zwischen Lagerelement (13) und Lagerrahmen (12) aufweist.

2. Lagerelement (13) nach Anspruch 1, wobei der erste Dichtbereich (1308) und der Drehschlußbereich (1307a; 1307b) zumindest teilweise zusammenfallen, so daß ein erster Oberflächenbereich des Drehschlußbereichs (1307a; 1307b) gleichermaßen als erste Dichtfläche des ersten Dichtbereichs (1308) ausgestaltet ist, wobei der erste Oberflächenbereich bevorzugt so gestaltet ist, daß in einer Abwicklung einer Schnittebene, die im wesentlichen einer konzentrischen Zylinderfläche um die aufzunehmende Rollenachse (143) entspricht und die durch den ersten Oberflächenbereich verläuft, eine Kurve entlang des Oberflächenverlaufs im Wesentlichen entlang einer zickzackförmigen oder wellenförmigen, insbesondere einer sinusförmigen Kurve verläuft, so daß der Drehschlußbereich (1307 a; 1307b) als erster Formschlußbereich (1307a) ausgeführt ist, und/oder, wobei der erste Oberflächenbereich bevorzugt so gestaltet ist, daß die Ortskurven zumindest mancher Punkte auf der zickzackförmigen oder wellenförmigen Kurve entlang des Oberflächenverlaufs von der Bezugsachse im wesentlichen in radialer Richtung nach außen verlaufen.

3. Lagerelement (13) nach einem der vorstehenden Ansprüche, welches den ersten Dichtbereich (1308) umgebend eine Oberflächengestaltung aufweist, die als ein erster Teil (1309) einer Labyrinthdichtung ausgebildet ist, und/oder, welches eine pilzähnliche Form mit einem Schirmelement (1301) und einem Stielelement (1304) aufweist, wobei der erste Dichtbereich (1308) auf der dem Stielelement (1304) abgewandten Seite des Schirmelements (1301) angeordnet ist.

4. Lagerelement (13) nach einem der vorstehenden Ansprüche, welches eine pilzähnliche Form mit einem Schirmelement (1301) und einem Stielelement (1304) aufweist, wobei der zweite Dichtbereich (1313) auf der dem Stielelement (1304) zugewandten Seite des Schirmelements (1301) angeordnet ist, wobei der zweite Dichtbereich (1313) bevorzugt aus einer Dichtlippe (1302) im Randbereich des Schirmelements (1301) und/oder aus einem Mittendichtbereich (1303) des Schirmelements (1301) gebildet wird, der im wesentlichen benachbart zum Stielelement (1304) angeordnet ist, wobei Dichtlippe (1302) im nicht in den Lagerrahmen eingesetzten Zustand bevorzugt in lagerrahmenseitiger Richtung über den Mittendichtbereich (1303) hinaus vorsteht.

5. Lagerelement (13) nach einem der vorstehenden Ansprüche, das auf der zweiten Seite bevorzugt im Bereich des Stielelements (1304) einen zweiten Formschlußbereich (1312) aufweist, wobei der zweite Formschlußbereich (1312) so gestaltet ist, daß eine Verdrehung des Lagerelements (13) gegenüber einem auf der zweiten Seite angrenzenden zweiten Bauteil verhindert wird, wobei der zweite Formschlußbereich (1312) bevorzugt zumindest teilweise aus einem mehreckigen, bevorzugt aus einem sechseckigen Querschnittsbereich des Stielelements (1304) gebildet ist.

6. Lagerelement (13) nach einem der vorstehenden Ansprüche, bei dem zumindest ein Halteelement (1305) vorgesehen ist, welches so gestaltet ist, daß es im in den Lagerrahmen (12) eingesetzten Zustand einen korrespondierenden Haltebereich (121) des Lagerrahmens (12) derart hintergreift, daß das Lagerelement (13) gegen herausfallen oder herausrutschen aus dem Lagerrahmen (12) gesichert ist, wobei der Abstand zwischen dem Mittendichtbereich (1303) des Lagerelements (13) und dem Halteelement (1305) des Lagerelements (13) im wesentlichen gleich oder etwas kleiner ist als der Abstand zwischen dem Haltebereich (121) des Lagerelements (13) und einem mit dem Mittendichtbereich (1303) korrespondierenden Lagerrahmendichtbereich.

7. Lagerelement (13) nach einem der vorstehenden Ansprüche, bei dem die Achsaufnahme (1310) als Sackloch oder als Durchgangsloch ausgebildet ist.

8. Lagerelement (13) nach einem der vorstehenden Ansprüche, bei dem die Achsaufnahme (1310) in Bezug auf eine aufzunehmende Rollenachse (143) derart bemessen ist, daß zwischen der Rollenachse (143) und der Achsaufnahme (1310) eine Passung gegeben ist, die eine Drehung zwischen Rollenachse (143) und Lagerelement (13) erschwert oder verhindert, und/oder bei dem die Achsaufnahme (1310) einen dritten Formschlußbereich aufweist, der mit einem Achsbereich der Rollenachse (143) korrespondiert und so gestaltet ist, daß eine Drehung zwischen Rollenachse (143) und Lagerelement (13) erschwert oder verhindert wird.

9. Lagerelement (13) nach einem der vorstehenden Ansprüche, das aus einem Material hergestellt wird, das schwingungsdämpfende und/oder geräuschdämpfende und/oder elektrisch leitende Eigenschaften hat, bevorzugt aus Polypropylen oder Polyamid, wobei das Lagerelement bevorzugt ein Spritzgussteil ist.

10. Rollenschild (15) zur stirnseitigen Abdeckung einer Transportrolle (14) eines Streckenförderers (1), welcher ein Achsloch (151) zur Aufnahme einer Rollenachsen (143), einen Schilddichtbereich (152) aufweist, **dadurch gekennzeichnet, dass** der Rollenschild einen Schilddrehschlußbereich (153a; 153b) aufweist, der so gestaltet ist, daß eine Verdrehung des Rollenschildes (15) gegenüber einem angrenzenden Bauteil, insbesondere gegenüber einem Lagerelement (13) nach einem der Ansprüche 1 - 9, verhindert werden kann.

11. Rollenschild (15) nach Anspruch 10, wobei der Schilddichtbereich (152) und der Schilddrehschlußbereich (153a; 153b) zumindest teilweise zusammenfallen, so daß ein Schildoberflächenbereich des ersten Schilddrehschlußbereichs (153a; 153b) gleichermaßen als Schilddichtfläche des ersten Schilddichtbereichs ausgestaltet ist, wobei der Schildoberflächenbereich bevorzugt so gestaltet ist, daß in einer Abwicklung einer Schnittebene, die im wesentlichen einer konzentrischen Zylinderfläche um die aufzunehmenden Rollenachse (143) entspricht und die durch den Schildoberflächenbereich verläuft, eine Kurve entlang des Schildoberflächenverlaufs im wesentlichen entlang einer zickzackförmigen oder wellenförmigen, insbesondere einer sinusförmigen Kurve verläuft, so daß der Schilddrehschlußbereich (153a; 153b) als erster Schildformschlußbereich (153a) ausgeführt ist, und/oder wobei der Schildoberflächenbereich bevorzugt so gestaltet ist, daß die Ortskurven zumindest mancher Punkte auf der zickzackförmigen oder wellenförmigen Kurve entlang des Schildoberflächenverlaufs von der Bezugsachse im wesentlichen in radialer Richtung nach außen verlaufen.

12. Rollenschild (15) nach einem der Ansprüche 10 - 11, welcher den Schilddichtbereich (152) umgebend eine Oberflächengestaltung aufweist, die als ein zweiter Teil (154) einer Labyrinthdichtung (2) ausgebildet ist.

13. Rollenschild (15) nach einem der Ansprüche 10 - 11, wobei das Achsloch (151) zumindest eine Rollenachsen-Anlagefläche (155) aufweist,die derart gestaltet ist, daß der Rollenschild (15) mit dem Außendurchmesser einer korrespondierenden Rollenachse (143) eine Passung bildet, die es ermöglicht, der Schild ohne wesentliches Spiel auf der Rollenachse (143) in axialer Richtung verschieblich zu lagern, und/oder wobei das Achsloch (151) zumindest einen Kraftspeicheranschlag (156) aufweist, der so gestaltet ist, daß ein erster Kraftspeicher an dem Kraftspeicheranschlag (156) angreifen kann, um den Rollenschild (15) auf einer Rollenachse (143) in axialer Richtung zu verschieben, wobei der Kraftspeicheranschlag (156) bevorzugt eine Rollenachsen-Anlagefläche (155) aufweist, und/oder wobei das Achsloch (151) sich durch einen Achslochfortsatz (157) des Rollenschildes (15) erstreckt, wobei der Achslochfortsatz (157) auf der Außenseite eine Rollenlager-Lagerfläche (158) aufweist, die derart gestaltet ist, daß der Rollenschild (15) mit dem Innendurchmesser eines korrespondierenden Rollenlagers eine Passung bildet, die es ermöglicht, den Rollenschild (15) ohne wesentliches Spiel in dem Rollenlager (142) in axialer Richtung verschieblich zu lagern und/oder wobei das Achsloch (151) einen vierten Formschlußbereich aufweist, der mit einem Achsbereich der Rollenachse (143) korrespondiert und so gestaltet ist, daß eine Drehung zwischen Rollenachse (143) und Lagerelement (13) verhindert wird, wobei eine Verschiebung der Rollenachse (143) zum Rollenschild (15) in axialer Richtung möglich bleibt.

14. Rollenschild (15) nach einem der Ansprüche 10 - 13, welches ferner eine ringförmige Nut und einen in der Nut angeordneten O-Ring (3) aufweist, wobei der Schilddichtbereich (152) und/oder der Schilddrehschlußbereich (153a; 153b) durch den O-Ring bereit gestellt werden, wobei die Nut bevorzugt stirnseitig an der dem Lagerelement zugewandten Seite des Rollenschildes vorgesehen ist und/oder wobei die Nut eine im wesentlichen einem Teilkreis entsprechende Querschnittsform aufweist, die etwas größer ist als der Querschnittsdurchmesser des O-Rings (3), wobei der Rand der Nut auf der der Rollenachse zugewandten Seite der Nut etwas in Richtung des O-Rings (3) vorragt, so daß eine Hinterschneidung gebildet wird, die verhindert, daß der O-Ring (3) im nicht zusammengebauten Zustand aus der Nut rutschen kann. und in dieser somit sicher gehalten wird.

15. Transportrolle (14), die zumindest ein Rollenaußenrohr (141), zumindest ein Rollenschild (15), zumindest ein Rollenlager (142), und zumindest eine Rollenachse (143) aufweist, **dadurch gekennzeichnet, dass** der Rollenschild (15) nach einem der Ansprüche 10 - 14 angeordnet ist und die Transportrolle (14) zumindest einen ersten Kraftspeicher (144) aufweist, wobei der erste Kraftspeicher (144) derart gestaltet und angeordnet ist, daß er den Rollenschild (15) mit einer Kraft beaufschlagt, die dazu geeignet ist, den Rollenschild (15) auf der Rollenachse (143) relativ zum Rollenaußenrohr (141) zu verschieben.

16. Transportrolle (14) nach Anspruch 15, bei der zumindest eine Rollenachse (143) relativ zum Rollenaußenrohr (141) verschieblich angeordnet ist und durch einen zweiten Kraftspeicher mit einer Kraft beaufschlagt ist, die dazu geeignet ist, die Rollenachse (143) relativ zum Rollenaußenrohr (141) nach außen zu drücken, und/oder, welche zwei Rollenschilder (15) und zwei Rollenachsen aufweist, von denen nur jeweils eines der Rollenschilder (15) und eine der Rollenachsen verschieblich und mit Kraft beaufschlagt ist.

17. Streckenförderer (1), welcher zumindest einen Lagerrahmen (12), zumindest eine Transportrolle (14) und zumindest ein Lagerelement (13) aufweist, wobei das Lagerelement (13) in eine korrespondierende Ausnehmung des Lagerrahmens (12) eingesetzt ist, die Rollenachse (143) der Transportrolle (14) in der Achsaufnahme (1310) des Lagerelements (13) aufgenommen ist, **dadurch gekennzeichnet, dass** die Transportrolle nach einem der Ansprüche 15 bis 16 angeordnet ist, wobei der Rollenschild (15) über den ersten Kraftspeicher (144) derart auf das Lagerelement (13) gedrückt wird, daß der erste Dichtbereich (1308) des Lagerelements (13) mit dem Schilddichtbereich (152) des Rollenschildes (15), der Drehschlußbereich (1307a; 1307b) des Lagerelements (13) mit dem Schilddrehschlußbereich (153a; 153b) des Rollenschildes (15) und der zweite Dichtbereich (1313) des Lagerelements (13) mit dem Lagerrahmendichtbereich in Kontakt stehen.

18. Streckenförderer (1), nach Anspruch 17, bei welchem der Drehschlußbereich als Reibschlußbereich (1307b) ausgeführt ist, wobei ein O-Ring (3) zwischen Lagerelement (13) und Rollenschild (15) vorgesehen ist,

## Claims

1. A bearing element (13) having a sealing function, for holding a roller axle (143) which is to be supported and for insertion into a bearing frame (12) which has an axle receptacle (1310), a first sealing region (1308) on a first side (1306), **characterized in that** the bearing element has a rotation locking region (1307a; 1307b), wherein the rotation locking region (1307a; 1307b) is configured in such a way that rotation of the bearing element (13) with respect to a component which adjoins on the first side can be prevented, and which has, on a second side (1311), lying essentially opposite the first side (1306) of the bearing element (13), a second sealing region (1313) for providing a seal between the bearing element (13) and the bearing frame (12).

2. The bearing element (13) as claimed in claim 1, wherein the first sealing region (1308) and the rotation locking region (1307a; 1307b) at least partially coincide, and a first surface region of the rotation locking region (1307a; 1307b) is therefore likewise configured as a first sealing face of the first sealing region (1308), wherein the first surface region is configured in such a way that in a developed view of a sectional plane, which coincides essentially with a concentric cylinder face about the roller axle (143) to be held and which runs through the first surface region, a curve runs along the surface profile, essentially along a zigzag-shaped or corrugated curve, in particular a sinusoidal curve, and the rotation locking region (1307a; 1307b) is therefore embodied as a first positively locking engagement region (1307a), and/or wherein the first surface region is preferably configured in such a way that the locus curves of at least some of the points on the zigzag-shaped or corrugated curve run outward in an essentially radial direction along the surface profile from the reference axis.

3. The bearing element (13) as claimed in one of the preceding claims, which has a surface configuration which surrounds the first sealing region (1308), which is embodied as a first part (1309) of a labyrinth seal, and/or which has a mushroom-like shape with a cap element (1301) and a stem element (1304), wherein the first sealing region (1308) is arranged on the side of the cap element (1301) facing away from the stem element (1304).

4. The bearing element (13) as claimed in one of the preceding claims, which has a mushroom-like shape with a cap element (1301) and a stem element (1304), wherein the second sealing region (1313) is arranged on the side of the cap element (1301) facing the stem element (1304), wherein the second sealing region (1313) is preferably formed from a sealing lip (1302) in the edge region of the cap element (1301) and/or from a central sealing region (1303) of the cap element (1301) which is arranged essentially adjacent to the stem element (1304), wherein, in the state in which it is not inserted into the bearing frame, the sealing lip (1302) preferably protrudes beyond the central sealing region (1303) in the direction of the bearing frame side.

5. The bearing element (13) as claimed in one of the preceding claims, which has a second positively locking engagement region (1312) on the second side, preferably in the region of the stem element (1304), wherein the second positively locking engagement region (1312) is configured in such a way that rotation of the bearing element (13) with respect to a second component which adjoins on the second side is prevented, wherein the second positively locking engagement region (1312) is formed at least partially from a polygonal cross-sectional region, preferably from a hexagonal cross-sectional region, of the stem element (1304).

6. The bearing element (13) as claimed in one of the preceding claims, in which at least one holding element (1305) is provided which is configured in such a way that, in the state in which it is inserted into the bearing frame (12), it engages behind a corresponding holding region (121) of the bearing frame (12) in such a way that the bearing element (13) is secured against dropping or sliding out of the bearing frame (12), wherein the distance between the central sealing region (1303) of the bearing element (13) and the holding element (1305) of the bearing element (13) is essentially equal to or somewhat smaller than the distance between the holding region (121) of the bearing element (13) and a bearing frame sealing region which coincides with the central sealing region (1303).

7. The bearing element (13) as claimed in one of the preceding claims, in which the axle receptacle (1310) is embodied as a blind hole or as a through hole.

8. The bearing element (13) as claimed in one of the preceding claims, in which the axle receptacle (1310) is dimensioned, with respect to a roller axle (143) which is to be accommodated, in such a way that a fit is provided between the roller axle (143) and the axle receptacle (1310), where the fit impedes or prevents rotation between the roller axle (143) and the bearing element (13), and/or in which the axle receptacle (1310) has a third positively locking engagement region which coincides with an axle region of the roller axle (143) and is configured in such a way that rotation between the roller axle (143) and the bearing element (13) is impeded or prevented.

9. The bearing element (13) as claimed in one of the preceding claims, which is manufactured from a material which has vibration-damping and/or noise-damping and/or electrically conductive properties, preferably of polypropylene or polyamide, the bearing element preferably being an injection molded part.

10. A roller plate (15) for end-side coverage of a transport roller (14) of a drift conveyor (1), which roller plate (15) has an axle hole (151) for receiving a roller axle (143), a plate sealing region (152), **characterized in that** the roller plate has a plate rotation locking region (153a; 153b) which is configured in such a way that rotation of the roller plate (15) with respect to an adjoining component, in particular with respect to a bearing element (13) as claimed in one of claims 1-9, can be prevented.

11. The roller plate (15) as claimed in claim 10, wherein the plate sealing region (152) and the plate rotation locking region (153a; 153b) at least partially coincide, and a plate surface region of the first plate rotation locking region (153a; 153b) is therefore embodied, to the same degree, as a plate sealing face of the first plate sealing region, wherein the plate surface region is preferably configured in such a way that in a developed view of a sectional plane, which corresponds essentially to a concentric cylindrical face about the roller axle (143) which is to be accommodated and which runs through the plate surface region, a curve runs along the plate surface profile, essentially along a zigzag-shaped or corrugated, in particular a sinusoidal curve, and the plate rotation locking region (153a; 153b) is therefore embodied as a first plate positively locking engagement region (153a), and/or wherein the plate surface region is preferably configured in such a way that the locus curves of at least some points on the zigzag-shaped or corrugated curve run outward in an essentially radial direction along the plate surface profile from the reference axis.

12. The roller plate (15) as claimed in one of claims 10-11, which has a surface configuration which surrounds the plate sealing region (152) and is embodied as a second part (154) of a labyrinth seal (2).

13. The roller plate (15) as claimed in one of claims 10-11, wherein the axle hole (151) has at least one roller axle bearing face (155) which is configured in such a way that the roller plate (15) forms, with the external diameter of a corresponding roller axle (143), a fit which permits it to mount the plate on the roller axle (143) in such a way that it can be displaced in the axial direction without significant play, and/or wherein the axle hole (151) has at least one force accumulator stop (156) which is configured in such a way that a first force accumulator can act on the force accumulator stop (156) in order to displace the roller plate (15) in an axial direction on a roller axle (143) wherein the force accumulator stop (156) preferably has a roller axle stop face (155), and/or wherein the axle hole (151) extends through an axle hole continuation (157) of the roller plate (15), wherein the axle hole continuation (157) has, on the outside, a roller-bearing bearing face (158) which is configured in such a way that the roller plate (15) forms, with the internal diameter of a corresponding roller bearing, a fit which permits it to mount the roller plate (15) in the roller bearing (142) in such a way that it can be displaced in the axial direction without significant play, and/or wherein the axle hole (151) has a fourth positively locking engagement region which corresponds to an axle region of the roller axle (143) and is configured in such a way that rotation between the roller axle (143) and the bearing element (13) is prevented, wherein displacement of the roller axle (143) with respect to the roller plate (15) remains possible in the axial direction.

14. The roller plate (15) as claimed in one of claims 10-13, which also has an annular groove and an O ring (3) which is arranged in the groove, wherein the plate sealing region (152) and/or the plate rotation locking region (153a; 153b) are made available by the O ring, wherein the groove is preferably provided on the end side on the side of the roller plate facing the bearing element, and/or wherein the groove has a cross-sectional shape which corresponds essentially to a partial circle and which is somewhat larger than the cross-sectional diameter of the O ring (3), wherein the edge of the groove projects somewhat in the direction of the O ring (3) on the side of the groove facing the roller axle, and an undercut is therefore formed which prevents the O ring (3) from being able to slip out of the groove in the non-assembled state, and said O ring (3) is therefore securely held in said groove.

15. A transport roller (14) which has at least one roller outer tube (141), at least one roller plate (15), at least one roller bearing (142), and at least one roller axle (143), **characterized in that** the roller plate (15) is arranged as claimed in one of claims 10-14 and the transport roller (14) has at least a first force accumulator (144), wherein the first force accumulator (144) is configured and arranged in such a way that it subjects the roller plate (15) to a force which is suitable for displacing the roller plate (15) on the roller axle (143) relative to the roller outer tube (141).

16. The transport roller (14) as claimed in claim 15, in which at least one roller axle (143) is arranged so as to be displaceable relative to the roller outer tube (141), and is subjected, by means of a second force accumulator, to a force which is suitable for pressing the roller axle (143) outward relative to the roller outer tube (141), and/or which has two roller plates (15) and two roller axles, of which only one of the roller plates (15) and one of the roller axles is respectively displaceable and subjected to force.

17. A drift conveyor (1), which has at least one bearing frame (12), at least one transport roller (14) and at least one bearing element (13), wherein the bearing element (13) is inserted into a corresponding recess in the bearing frame (12), the roller axle (143) of the transport roller (14) is held in the axle receptacle (1310) of the bearing element (13), **characterized in that** the transport roller is arranged as claimed in one of claims 15 to 16, wherein the roller plate (15) is pressed onto the bearing element (13) via the first force accumulator (144) in such a way that the first sealing region (1308) of the bearing element (13) is in contact with the plate sealing region (152) of the roller plate (15), the rotation locking region (1307a; 1307b) of the bearing element (13) is in contact with the plate rotation locking region (153a; 153b) of the roller plate (15), and the second sealing region (1313) of the bearing element (13) is in contact with the bearing frame sealing region.

18. The drift conveyor (1) as claimed in claim 17, in which the rotation locking region is embodied as a friction locking region (1307b), wherein an O ring (3) is provided between the bearing element (13) and the roller plate (15).

## Revendications

1. Elément de palier (13) avec fonction d'étanchéité pour recevoir un axe de rouleau (143) à mettre sur palier et pour l'insertion dans un cadre de palier (12), qui présente sur un premier côté (1306) un logement d'axe (1310), une première zone d'étanchéité (1308), **caractérisé en ce que** l'élément de palier présente une zone de liaison de rotation (1307a ; 1307b), la zone de liaison de rotation (1307a ; 1307b) étant constituée de sorte qu'une torsion de l'élément de palier (13) par rapport à un composant adjacent sur le premier côté peut être empêchée, et qui, sur un deuxième côté (1311) de l'élément de palier (13) opposé essentiellement au premier côté (1306), présente une deuxième zone d'étanchéité (1313) pour réaliser l'étanchéité entre l'élément de palier (13) et le cadre de palier (12).

2. Elément de palier (13) selon la revendication 1, la première zone d'étanchéité (1308) et la zone de liaison de rotation (1307a ; 1307b) coïncidant au moins partiellement de sorte qu'une première zone superficielle de la zone de liaison de rotation (1307a ; 1307b) est de la même façon configurée en tant que première surface d'étanchéité de la première zone d'étanchéité (1308), la première zone superficielle étant de préférence constituée de sorte que, dans une projection développée d'un plan de coupe qui correspond essentiellement à une surface cylindrique concentrique autour de l'axe de rouleau (143) à recevoir et qui traverse la première zone superficielle, une courbe court le long du profil superficiel essentiellement le long d'une courbe en zigzag ou ondulée, en particulier d'une courbe sinusoïdale, de sorte que la zone de liaison de rotation (1307a ; 1307b) est réalisée en tant que première zone de liaison de forme (1307a), et/ou la première zone superficielle étant constituée de préférence de sorte que les courbes locales d'au moins de nombreux points sur la courbe en zigzag ou ondulée le long du profil superficiel de l'axe de référence sont disposées essentiellement vers l'extérieur dans la direction radiale.

3. Elément de palier (13) selon une des revendications précédentes, qui, entourant la première zone d'étanchéité (1308), présente une constitution superficielle qui est formée en tant que première partie (1309) d'un joint-labyrinthe, et/ou qui présente une forme semblable à un champignon avec un élément de chapeau (1301) et un élément de tige (1304), la première zone d'étanchéité (1308) étant disposée sur le côté de l'élément de chapeau (1301) opposé à l'élément de tige (1304).

4. Elément de palier (13) selon une des revendications précédentes, qui présente une forme semblable à un champignon avec un élément de chapeau (1301) et un élément de tige (1304), la deuxième zone d'étanchéité (1313) étant disposée sur le côté de l'élément de chapeau (1301) tourné vers l'élément de tige (1304), la deuxième zone d'étanchéité (1313) étant de préférence formée d'un bec d'étanchéité (1302) dans la zone marginale de l'élément de chapeau (1301) et/ou d'une zone d'étanchéité médiane (1303) de l'élément de chapeau (1301) qui est disposée essentiellement au voisinage de l'élément de tige (1304), le bec d'étanchéité (1302), dans l'état non inséré dans le cadre de palier, dépassant de préférence au-delà de la zone d'étanchéité médiane (1303) dans la direction côté cadre de palier.

5. Elément de palier (13) selon une des revendications précédentes, qui présente, sur le deuxième côté, de préférence dans la zone de l'élément de tige (1304), une deuxième zone de liaison de forme (1312), la deuxième zone de liaison de forme (1312) étant constituée de sorte qu'une torsion de l'élément de palier (13) par rapport à un deuxième composant adjacent sur le deuxième côté est empêchée, la deuxième zone de liaison de forme (1312) étant de préférence formée au moins partiellement d'une zone à section transversale polygonale, de préférence hexagonale, de l'élément de tige (1304).

6. Elément de palier (13) selon une des revendications précédentes, dans lequel il est prévu au moins un élément de retenue (1305) qui est constitué de sorte que, dans l'état inséré dans le cadre de palier (12), il agrippe par derrière une zone de retenue (121) correspondante du cadre de palier (12) de sorte que l'élément de palier (13) est protégé contre une chute ou un glissement hors du cadre de palier (12), l'intervalle entre la zone d'étanchéité médiane (1303) de l'élément de palier (13) et l'élément de retenue (1305) de l'élément de palier (13) étant essentiellement identique ou légèrement intérieur à l'intervalle entre la zone de retenue (121) de l'élément de palier (13) et une zone d'étanchéité de cadre de palier correspondant à la zone d'étanchéité médiane (1303).

7. Elément de palier (13) selon une des revendications précédentes, dans lequel le logement d'axe (1310) est constitué en tant que trou borgne ou en tant que trou débouchant.

8. Elément de palier (13) selon une des revendications précédentes, dans lequel le logement d'axe (1310) est, par rapport à un axe de rouleau (143) à recevoir, dimensionné de sorte que, entre l'axe de rouleau (143) et le logement d'axe (1310), il existe un ajustement qui gêne ou empêche une rotation entre l'axe de rouleau (143) et l'élément de palier (13), et/ou dans lequel le logement d'axe (1310) présente une troisième zone de liaison de forme qui correspond à une zone d'axe de l'axe de rouleau (143) et qui est constituée de sorte qu'une rotation entre l'axe de rouleau (143) et l'élément de palier (13) est gênée ou empêchée.

9. Elément de palier (13) selon une des revendications précédentes, qui est réalisé dans un matériau qui a des propriétés d'amortissement des vibrations et/ou d'amortissement du bruit et/ou de conduction électrique, de préférence en polypropylène ou en polyamide, l'élément de palier étant de préférence une pièce moulée par injection.

10. Ecran de rouleau (15) pour la couverture côté frontal d'un rouleau de transport (14) d'un convoyeur de galerie (1), qui présente un trou d'axe (151) pour loger un axe de rouleau (143), une zone d'étanchéité d'écran (152), **caractérisé en ce que** l'écran de rouleau présente une zone de liaison de rotation d'écran (153a ; 153b) qui est constituée de sorte qu'une torsion de l'écran de rouleau (15) par rapport à un composant adjacent, en particulier par rapport à un élément de palier (13) selon une des revendications 1 - 9, peut être empêchée.

11. Ecran de rouleau (15) selon la revendication 10, la zone d'étanchéité d'écran (152) et la zone de liaison de rotation d'écran (153a ; 153b) coïncidant au moins partiellement, de sorte qu'une zone superficielle d'écran de la première zone de liaison de rotation d'écran (153a ; 153b) est de la même façon configurée en tant que surface d'étanchéité d'écran de la première zone d'étanchéité d'écran, la zone superficielle d'écran étant de préférence constituée de sorte que, dans une projection développée d'un plan de coupe qui correspond essentiellement à une surface cylindrique concentrique autour de l'axe de rouleau (143) à recevoir et qui traverse la zone superficielle d'écran, une courbe court le long du profil superficiel d'écran essentiellement le long d'une courbe en zigzag ou ondulée, en particulier d'une courbe sinusoïdale, de sorte que la zone de liaison de rotation d'écran (153a ; 153b) est réalisée en tant que première zone de liaison de forme d'écran (153a), et/ou la zone superficielle d'écran étant de préférence constituée de sorte que les courbes locales d'au moins de nombreux points sur la courbe en zigzag ou ondulée le long du profil superficiel d'écran de l'axe de référence sont disposées essentiellement vers l'extérieur dans la direction radiale.

12. Ecran de rouleau (15) selon une des revendications 10 - 11, qui présente, entourant la zone d'étanchéité d'écran (152), une constitution superficielle qui est formée en tant que deuxième partie (154) d'un joint-labyrinthe (2).

13. Ecran de rouleau (15) selon une des revendications 10 - 11, le trou d'axe (151) présentant au moins une surface d'appui d'axe de rouleau (155) qui est constituée de sorte que l'écran de rouleau (15) forme, avec le diamètre extérieur d'un axe de rouleau (143) correspondant, un ajustement qui permet de déplacer par translation l'écran sans jeu important sur l'axe de rouleau (143) dans la direction axiale, et/ou le trou d'axe (151) présentant au moins une butée d'accumulation de force (156) qui est constituée de sorte qu'un premier accumulateur de force peut agir sur la butée d'accumulation de force (156) pour déplacer l'écran de rouleau (15) sur un axe de rouleau (143) dans la direction axiale, la butée d'accumulation de force (156) présentant de préférence une surface d'appui d'axe de rouleau (155), et/ou le trou d'axe (151) s'étendant à travers un prolongement de trou d'axe (157) de l'écran de rouleau (15), le prolongement de trou d'axe (157) présentant sur le côté extérieur une portée de palier de rouleau (158) qui est constituée de sorte que l'écran de rouleau (15) forme avec le diamètre intérieur d'un palier de rouleau correspondant un ajustement qui permet de déplacer par translation l'écran de rouleau (15) sans jeu notable dans le palier de rouleau (142) dans la direction axiale, et/ou le trou d'axe (151) présentant une quatrième zone de liaison de forme qui correspond à une zone d'axe de l'axe de rouleau (143) et qui est constituée de sorte qu'une rotation entre l'axe de rouleau (143) et l'élément de palier (13) est empêchée, une translation de l'axe de rouleau (143) vers l'écran de rouleau (15) dans la direction axiale demeurant possible.

14. Ecran de rouleau (15) selon une des revendications 10 - 13, qui présente en outre une rainure annulaire et un joint torique (3) disposé dans la rainure, la zone d'étanchéité d'écran (152) et/ou la zone de liaison de rotation d'écran (153a ; 153b) étant déjà mise en place par le joint torique, la rainure étant de préférence prévue en face avant sur le côté de l'écran de rouleau tourné vers l'élément de palier et/ou la rainure présentant une forme de section transversale, correspondant essentiellement à un cercle partiel, qui est légèrement plus grande que le diamètre de section transversale du joint torique (3), le bord de la rainure sur le côté de la rainure tourné vers l'axe de rouleau dépassant légèrement en direction du joint torique (3) de sorte qu'il est formé une contre-dépouille qui empêche que le joint torique (3) puisse, dans l'état non assemblé, glisser hors de la rainure, et de sorte qu'il est ainsi fermement retenu dans cette dernière.

15. Rouleau de transport (14), qui présente au moins un tube extérieur de rouleau (141), au moins un écran de rouleau (15), au moins un palier de rouleau (142) et au moins un axe de rouleau (143), **caractérisé en ce que** l'écran de rouleau (15) est disposé selon une des revendications 10 - 14, et **en ce que** le rouleau de transport (14) présente au moins un premier accumulateur de force (144), le premier accumulateur de force (144) étant constitué et disposé de sorte qu'il fournit à l'écran de rouleau (15) une force qui convient pour déplacer l'écran de rouleau (15) sur l'axe de rouleau (143) par rapport au tube extérieur de rouleau (141).

16. Rouleau de transport (14) selon la revendication 15, dans lequel au moins un axe de rouleau (143) est disposé de façon mobile par rapport au tube extérieur de rouleau (141) et est alimenté, par un deuxième accumulateur de force, avec une force qui convient pour presser vers l'extérieur l'axe de rouleau (143) par rapport au tube extérieur de rouleau (141), et/ou qui présente deux écrans de rouleau (15) et deux axes de rouleau dont respectivement seul un des écrans de rouleau **(15) et un des axes** de rouleau est mobile et est alimenté avec une force.

17. Convoyeur de galerie (1), qui présente au moins un cadre de palier (12), au moins un rouleau de transport (14), et au moins élément de palier (13), l'élément de palier (13) étant inséré dans un évidement correspondant du cadre de palier (12), l'axe de rouleau (143) du rouleau de transport (14) étant logé dans le logement d'axe (1310) de l'élément de palier (13), **caractérisé en ce que** le rouleau de transport est disposé selon une des revendications 15 à 16, l'écran de rouleau (15) étant pressé par le biais du premier accumulateur de force (144) sur l'élément de palier (13) de sorte que la première zone d'étanchéité (1308) de l'élément de palier (13) est en contact avec la zone d'étanchéité d'écran (152) de l'écran de rouleau (15), la zone de liaison de rotation (1307a ; 1307b) de l'élément de palier (13) est en contact avec la zone de liaison de rotation d'écran (153a; 153b) de l'écran de rouleau (15) et la deuxième zone d'étanchéité (1313) de l'élément de palier (13) est en contact avec la zone d'étanchéité de cadre de palier.

18. Convoyeur de galerie (1) selon la revendication 17, dans lequel la zone de liaison de rotation est réalisée en tant que zone de liaison de friction (1307b), un joint torique (3) étant prévu entre l'élément de palier (13) et l'écran de rouleau (15).
